# FASCICULE DE BREVET EUROPEEN

(11) **EP 3 194 233 B1**
(45) Date de publication et mention de la délivrance du brevet: **19.02.2020**
(21) Numéro de dépôt: 15787654.1
(22) Date de dépôt: 17.09.2015
(51) Int. Cl.: B61D 25/00

(54) **VITRAGE LATERAL DE MOYEN DE TRANSPORT A FENETRE OUVRABLE**
SEITENVERGLASUNG EINES TRANSPORTMITTELS MIT EINEM ZU ÖFFNENDEN FENSTER
SIDE GLAZING OF A TRANSPORT MEANS HAVING AN OPENABLE WINDOW

(30) Priorité: 19.09.2014 FR 1458870
(43) Date de publication de la demande: 26.07.2017
(73) Titulaire: Saint-Gobain Glass France, 92400 Courbevoie (FR)
(72) Inventeur: KLEITSCH, Michael, 50997 Köln (DE); GRIGO, Uwe, 51143 Köln (DE)
(74) Mandataire: Saint-Gobain Recherche
(86) Numéro de dépôt international: PCT/FR2015/052491
(87) Numéro de publication internationale: WO 2016/042270

(56) Documents cités:
- EP-A1- 1 527 920
- EP-A1- 2 363 284
- DE-C1- 10 119 315
- DE-C1- 10 207 600
- FR-A1- 2 708 927
- FR-A3- 2 787 497
- DATABASE WPI Thomson Scientific, London, GB; AN 2013-K05367 XP002743436, & CN 202 788 522 U (SUZHOU SUCHENG RAIL TRANSP EQUIPMENT CO LTD) 13 mars 2013 (2013-03-13) cité dans la demande

## Description

L'invention concerne la réalisation d'un vitrage latéral d'un moyen de transport, et en particulier un vitrage de train, ledit vitrage étant un vitrage multiple, fixe, à fenêtre ouvrable.

Un tel vitrage comprend habituellement :
- un substrat extérieur ayant une face extérieure qui fait face à un espace extérieur, une face intermédiaire à l'opposé de la face extérieure, ainsi qu'un chant périphérique,
- un substrat intérieur ayant une face intérieure qui fait face à un espace intérieur, une face intermédiaire à l'opposé de la face intérieure, ainsi qu'un chant périphérique,
- et une structure de cadre de vitrage qui tient le substrat extérieur et le substrat intérieur ensemble de telle sorte que le vitrage sépare ledit espace extérieur dudit espace intérieur avec une cavité de vitrage située entre le substrat extérieur et le substrat intérieur,
- ledit substrat extérieur et ledit substrat intérieur comportant chacun, dans une partie supérieure, un trou débouchant sur chaque face du substrat et séparé du chant périphérique du substrat, les trous des substrats étant en vis-à-vis l'un de l'autre, afin de permettre de réaliser la fenêtre ouvrable,
- la structure de cadre de vitrage maintenant en outre les deux substrats autour des trous.

L'art antérieur connaît du modèle d'utilité chinois N° CN 202788522, un tel vitrage latéral de moyen de transport multiple, fixe, à fenêtre ouvrable.

Ce vitrage présente une esthétique satisfaisante grâce aux substrats munis chacun d'un trou rectangulaire pour permettre de réaliser la fenêtre ouvrable.

Ce vitrage présente une capacité d'isolation thermique satisfaisante grâce à présence de la cavité de vitrage entre les deux substrats.

Toutefois, ce vitrage ne constitue pas un vitrage dit « de sécurité » car les substrats en verre, même si un ou tous les deux a ou ont subi un traitement chimique ou thermique destiné à le ou les renforcer, ne permet pas de réaliser un vitrage de sécurité dans le sens où si un objet percute l'un des substrats et le brise, cela signifie que cet objet a très probablement suffisamment d'énergie pour pouvoir briser l'autre substrat et ainsi briser complètement le vitrage.

Seul un feuilletage, comprenant au moins une feuille de matière plastique puis une feuille de verre qui sont prévus dans cet ordre sur une surface d'un substrat, permet de réaliser un vitrage de sécurité. Un tel vitrage de sécurité est plus résistant aux chocs, tout en permettant au besoin une évacuation après rupture des substrats en verre et en découpant la feuille de matière plastique.

L'art antérieur connaît par ailleurs de la demande de brevet européen N° EP 2 363 284, une structure de vitrage latéral de moyen de transport, ce vitrage étant multiple, fixe, de sécurité, mais sans fenêtre ouvrable. Ce document expose une solution permettant de faciliter la rupture du vitrage, et ainsi de faciliter l'évacuation.

Dans ce document, il est proposé qu'un feuilletage de renfort d'un substrat du vitrage ne soit pas au contact d'une structure périphérique de cadre de vitrage en prévoyant que ce feuilletage soit en retrait de cette structure périphérique. Ce retrait est le même tout autour de la périphérie du substrat : la distance entre le chant du feuilletage et le chant su substrat qui le porte est la même tout le long de la périphérie.

Lorsque ce feuilletage en retrait est appliqué à l'enseignement du document CN 202788522, logiquement ce feuilletage doit faire tout le tour de la structure de fenêtre. Le retrait suit logiquement le pourtour périphérique du substrat porteur du feuilletage et est alors présent non seulement sous la fenêtre ouvrable, mais aussi sur les côtés de cette fenêtre et au-dessus.

Le but de l'invention est de permettre de réaliser un vitrage multiple, fixe, à fenêtre ouvrable, qui présente une facilité de destruction dans une partie inférieure située sous la fenêtre ouvrable pour permettre une évacuation de secours, tout en permettant de préserver la structure de vitrage qui maintient la fenêtre afin que cette structure et cette fenêtre ne gênent pas l'évacuation de secours.

L'invention repose ainsi sur le fait de prévoir un feuilletage de renfort dans la partie de vitrage située sous la fenêtre, sans que ce feuilletage soit en contact avec la structure de vitrage qui maintient la fenêtre.

L'invention a pour objet, dans son acception la plus large, un vitrage latéral d'un moyen de transport, en particulier un vitrage de train, selon la revendication 1. Ledit vitrage est un vitrage multiple, fixe, à fenêtre ouvrable, comprenant :
- un substrat extérieur ayant une face extérieure qui fait face à un espace extérieur, une face intermédiaire à l'opposé de la face extérieure, ainsi qu'un chant périphérique,
- un substrat intérieur ayant une face intérieure qui fait face à un espace intérieur, une face intermédiaire à l'opposé de la face intérieure, ainsi qu'un chant périphérique,
- et une structure de cadre de vitrage qui tient le substrat extérieur et le substrat intérieur ensemble de telle sorte que le vitrage sépare ledit espace extérieur dudit espace intérieur avec une cavité de vitrage située entre le substrat extérieur et le substrat intérieur,
- ledit substrat extérieur et ledit substrat intérieur comportant chacun, dans une partie supérieure, un trou débouchant sur chaque face du substrat et séparé du chant périphérique du substrat, les trous des substrats étant en vis-à-vis l'un de l'autre, afin de permettre de réaliser la fenêtre ouvrable,
- la structure de cadre de vitrage maintenant en outre les deux substrats autour des trous.

Le vitrage selon l'invention est remarquable en ce que au moins une face intermédiaire de substrat qui fait face à la cavité de vitrage comporte dans une partie du vitrage située sous ladite fenêtre d'une part une feuille de verre principale et d'autre part une feuille de matière plastique principale qui est située en contact entre la face intermédiaire et la feuille de verre principale, sans que la feuille de verre principale et la feuille de matière plastique principale soient au contact de ladite structure de cadre de vitrage.

Ainsi, lorsque le vitrage est orienté verticalement, le feuilletage comprenant la feuille de verre principale et la feuille de matière plastique principale est disposé en-dessous de la fenêtre ouvrable ; ce feuilletage s'arrête en haut à une distance, en-dessous d'un bord périphérique inférieur du trou du substrat qui permet de réaliser la fenêtre et sur les côtés et en bas à une distance du chant périphérique du substrat qui le porte, afin que lorsque ce feuilletage est brisé pour permettre une évacuation de secours, sa destruction n'ait pas d'influence sur l'intégrité du vitrage tout autour et tout particulièrement n'ait pas d'influence au-dessus, sur l'intégrité de la fenêtre.

Puisque ce feuilletage principal est situé sous la fenêtre ouvrable, il ne s'étend pas sur les côtés gauche et droit de la fenêtre ouvrable, ni au-dessus de la fenêtre ouvrable (lorsque le vitrage est considéré vertical).

Le feuilletage principal s'arrête dans sa partie supérieure en dessous d'une ligne horizontale qui serait réalisée par le bord inférieur du trou du substrat porteur du feuilletage principal, cette ligne étant fictivement prolongée sur le substrat porteur du feuilletage principal, à gauche et à droite du trou.

Il est donc possible de briser le vitrage en dessous de la fenêtre afin de permettre une évacuation de secours sous la fenêtre, en préservant l'intégrité de la fenêtre et l'intégrité du reste de vitrage, afin que cette fenêtre et le reste du vitrage ne gênent pas l'évacuation.

Ladite feuille de verre principale et ladite feuille de matière plastique principale sont, de préférence, disposées en retrait d'au moins 2 mm, et de préférence entre 2 et 5 mm, par rapport à ladite structure de cadre de vitrage. Ce retrait est de préférence constant tout autour du feuilletage principal. Une valeur de retrait comprise dans cette plage de 2 à 5 mm permet que le feuilletage renforce au maximum le substrat qui le porte, tout en étant suffisante pour permettre de préserver l'intégrité de la structure de vitrage et permet en outre que ce retrait soit peu visible de l'intérieur en conservant un clair de vitre à travers le feuilletage qui soit le plus grand possible.

Pour améliorer la capacité à conserver l'intégrité de la structure de vitrage tout en permettant le passage sous la fenêtre en cas de bris, de préférence, au moins une face intermédiaire de substrat qui fait face à la cavité de vitrage, et de préférence encore les deux faces intermédiaires de substrat qui font face à la cavité de vitrage, comporte(nt) dans une partie du vitrage située au-dessus de ladite fenêtre, d'une part une feuille de verre secondaire et d'autre part une feuille de matière plastique secondaire qui est située en contact entre la face intermédiaire et la feuille de verre secondaire, avec la feuille de verre secondaire et la feuille de matière plastique secondaire au contact de ladite structure de cadre de vitrage.

Ainsi, le vitrage se trouve renforcé dans sa partie au-dessus de la fenêtre. Toutefois, ce feuilletage secondaire comprenant la feuille de verre secondaire et la feuille de matière plastique secondaire, s'il est situé sur le même substrat que le feuilletage principal, est distinct du feuilletage principal : le feuilletage secondaire est séparé du feuilletage principal par une bande de substrat non feuilletée ; cette bande présente par exemple une hauteur de l'ordre de 5 à 50 millimètres.

De préférence, ladite feuille de matière plastique secondaire et ladite feuille de verre secondaire sont aussi situées de chaque côté latéral de ladite fenêtre. Ainsi, le vitrage se trouve renforcé aussi dans ses deux parties latérales, de chaque côté de la fenêtre.

Dans une variante plus facile à fabriquer, ladite feuille de matière plastique principale et ladite feuille de matière plastique secondaire sont toutes les deux situées contre la face intermédiaire d'un même substrat, et de préférence du substrat extérieur. De préférence, ces deux feuilles de matières plastiques ne sont pas en contact l'une avec l'autre afin de ne pas créer de liaison mécanique ou chimique directe entre elles.

De préférence, chaque substrat est en verre qui a subi un traitement chimique ou thermique destiné à le renforcer.

Dans un mode particulier de réalisation de l'invention, ladite fenêtre comporte, un élément verrier extérieur, un élément verrier intérieur et une structure de cadre de fenêtre maintenant ledit élément verrier extérieur avec ledit élément verrier intérieur en réalisant une cavité de fenêtre située entre l'élément verrier extérieur et l'élément verrier intérieur, une face de l'élément verrier extérieur qui fait face à la cavité de fenêtre comportant d'une part une feuille de verre de fenêtre et d'autre part une feuille de matière plastique de fenêtre qui est située en contact entre l'élément verrier extérieur et la feuille de verre de fenêtre, avec la feuille de verre de fenêtre et la feuille de matière plastique de fenêtre au contact de ladite structure de cadre de fenêtre. Ce contact avec la structure de cadre de fenêtre permet d'augmenter la résistance mécanique de la fenêtre.

Le « cadre de fenêtre » désigne le pourtour de la fenêtre ouvrable qui est mobile avec la fenêtre lors de l'ouverture ou de la fermeture de la fenêtre.

Ladite structure de cadre de vitrage comporte, de préférence, une traverse horizontale située sous ladite fenêtre, ladite traverse n'étant pas en contact avec deux montants latéraux de la structure de cadre de vitrage.

Ladite cavité de vitrage est, de préférence, située tout autour de ladite fenêtre (cette cavité de vitrage est d'un seul tenant).

Le vitrage selon l'invention ne comporte, de préférence, aucun élément saillant vers l'extérieur, au-delà de la face extérieure du substrat extérieur.

Chaque feuille de matière plastique utilisée pour le vitrage selon l'invention présente une capacité à renforcer la résistance mécanique en faisant adhérer la feuille de verre disposée dessus au substrat ou à l'élément verrier disposé dessous ; dans ce vitrage, au moins une de ces feuilles de matière plastique, voire toutes ces feuilles de matière plastique, peut ou peuvent présenter en outre une capacité d'isolation phonique.

Avantageusement, la présente invention permet ainsi de réaliser un vitrage multiple fixe de moyen de transport qui est présente des caractéristiques d'isolation thermique élevées, des caractéristiques de tenue mécanique élevées, tout en ayant une fenêtre ouvrable et qui puisse servir d'issue de secours.

La présente invention permet en particulier que l'espace du vitrage qui est situé sous la fenêtre ouvrable puisse être utilisé comme issue de secours en préservant l'intégrité du reste du vitrage, c'est-à-dire en permettant à la structure de fenêtre de rester en place afin de ne pas gêner l'évacuation, en dessous, par l'issue de secours ainsi créée.

Avantageusement, la présente invention permet ainsi de réaliser un vitrage multiple fixe à fenêtre ouvrable qui présente une vue extérieure lisse, sans élément mécanique plus à l'extérieur que la face extérieure du substrat extérieur.

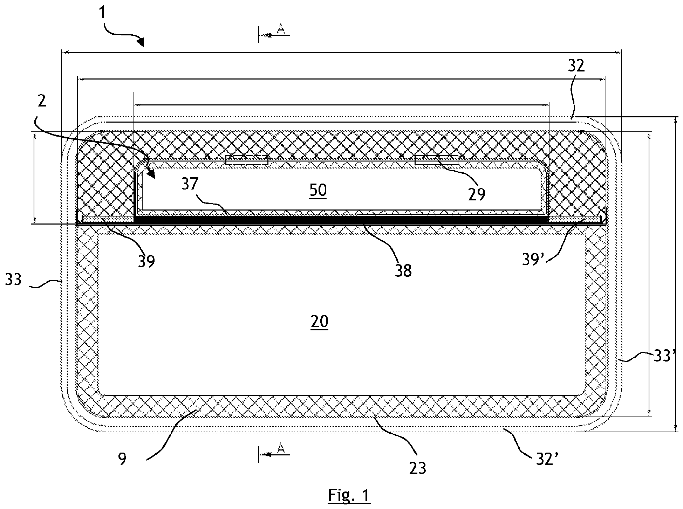

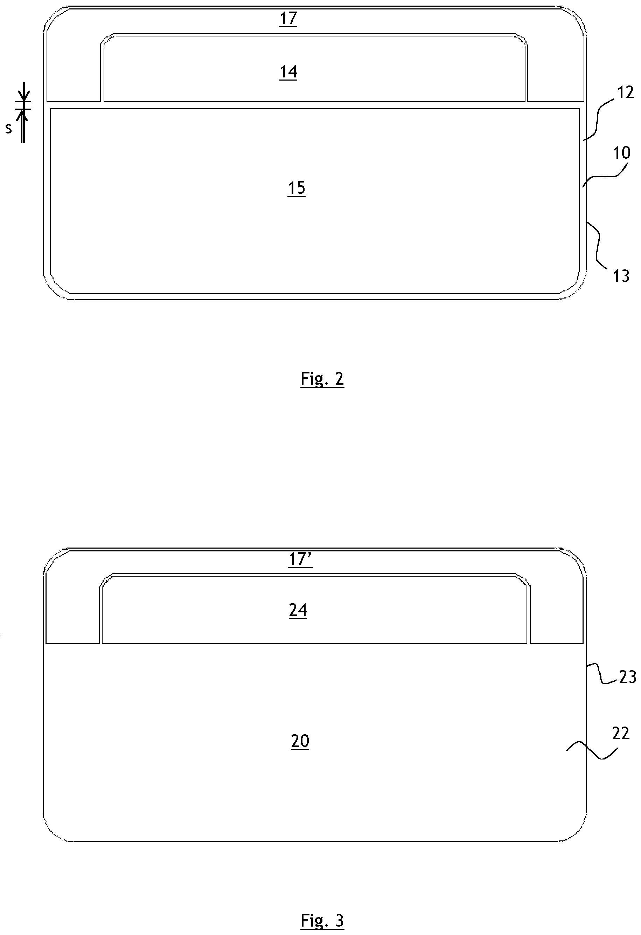

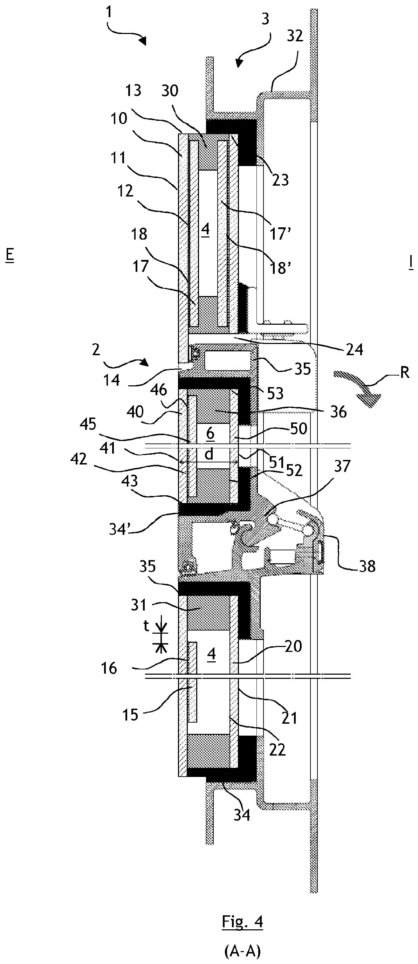

Les détails et caractéristiques avantageuses de l'invention ressortent de l'exemple non limitatif suivant, illustré à l'aide des figures ci-jointes illustrant :
- en figure 1, un vitrage selon l'invention vu de l'espace intérieur ;
- en figure 2, le substrat extérieur du vitrage de la figure 1 vu de la cavité de vitrage et vers l'extérieur ;
- en figure 3, le substrat intérieur du vitrage de la figure 1 vu de la cavité de vitrage et vers l'intérieur ; et
- en figure 4, le vitrage de la figure 1 vu en coupe selon AA de cette figure.

Dans les figures 1 à 4 les proportions entre les dimensions des différents éléments sont respectées afin de faciliter leur lecture ; les mêmes références désignent les mêmes éléments dans toutes les figures.

Les figures 1 et 4 illustrent un vitrage 1 latéral d'un moyen de transport, selon l'invention, tel qu'il peut être vu par un passager situé à l'intérieur de ce moyen de transport.

Il s'agit en particulier d'un vitrage latéral de train et la figure 1 illustre ainsi ce qu'un passager du train voit en regardant sur un côté gauche ou droit par rapport à une direction générale d'avancé du train.

Ce vitrage réalise ainsi une séparation verticale entre un espace intérieure I qui est à l'intérieur du train et un espace extérieur E qui est à l'extérieur du train.

Ce vitrage est fixe et comporte une fenêtre 2 ouvrable.

Ce vitrage 1 comprend :
- un substrat extérieur 10 qui comporte deux faces principales : une face extérieure 11 qui fait face à l'espace extérieur E et une face intermédiaire 12 qui est à l'opposé de la face extérieure ; ce substrat comporte par ailleurs un chant périphérique 13,
- un substrat intérieur 20 qui comporte deux faces principales : une face intérieure 21 qui fait face à l'espace intérieur I et une face intermédiaire 22 qui est à l'opposé de la face intérieure ; ce substrat comporte par ailleurs un chant périphérique 23,
- et une structure de cadre de vitrage 3 qui maintient fixement ensemble le substrat extérieur 10 et le substrat intérieur 20 ; toutefois, un espace fermé est situé entre les deux substrats : il s'agit d'une cavité de vitrage 4.

Le substrat extérieur 10 et le substrat intérieur 20 sont chacun d'un seul tenant et comportent chacun, dans une partie supérieure (par rapport à la verticale), un trou 14, 24, chaque trou débouchant sur chaque face de chaque substrat et est séparé du chant périphérique du substrat, les trous des substrats étant en vis-à-vis l'un de l'autre, afin de permettre de réaliser la fenêtre 2 ouvrable, c'est-à-dire afin de permettre de réaliser le pourtour fixe de la fenêtre ouvrable.

La structure de cadre de vitrage 3 maintient en outre les deux substrats autour des trous 14, 24.

La structure de cadre de vitrage 3 permet ainsi de maintenir les deux substrats 10, 20 à distance l'un de l'autre, y compris autour de la fenêtre ouvrable, avec une distance constante entre les deux substrats 10, 20.

Le vitrage 1 est un vitrage multiple dans le sens où il comporte plusieurs substrats 10, 20 ainsi que la cavité de vitrage 4 qui est située entre les deux substrats, cette cavité étant remplie d'air ou de gaz, de préférence neutre comme l'argon ; cette cavité participe à l'isolation thermique conférée par le vitrage 1.

Ce vitrage 1 est un vitrage fixe dans le sens où la structure de cadre de vitrage 3 est destinée à être fixée à la structure du moyen de transport (ici le train), sans possibilité de bouger par rapport à cette structure ; dans le vitrage 1, seule la fenêtre 2 est mobile par rapport à la structure de cadre de vitrage 3.

La fenêtre 2 est une fenêtre interne au vitrage 1 ; elle est ouvrable dans le sens où elle peut être ouverte et refermée par rapport à la structure de cadre de vitrage 3, qui est fixe. Bien sûr, des moyens sont prévus pour guider ces mouvements d'ouverture et de fermeture, ainsi que pour les limiter. Pour des raisons de sécurité, la fenêtre 2 est ouvrable vers l'espace intérieur et non vers l'espace extérieur.

Dans le cadre de l'invention, au moins une face intermédiaire 12, 22 d'un des substrats 10, 20 qui fait face à la cavité de vitrage 4 comporte dans une partie du vitrage qui est située sous ladite fenêtre :
- d'une part une feuille de verre principale 15
- et d'autre part une feuille de matière plastique principale 16,
- avec cette feuille de matière plastique principale 16 qui est située entre la face intermédiaire 12, 22 et la feuille de verre principale 15,
- cette feuille de matière plastique principale 16 qui est en contact à la fois avec la face intermédiaire 12, 22 et avec la feuille de verre principale 15,
- sans que la feuille de verre principale 15 et la feuille de matière plastique principale 16 soient au contact de ladite structure de cadre de vitrage 3.

Ainsi, le vitrage 1 comporte au moins un de ses substrats qui est feuilleté, mais ce feuilletage est particulier car la feuille de matière plastique puis la feuille de verre qui sont ajoutées dans cet ordre sur la face intermédiaire du substrat présentent une périphérie resserrée par rapport à la périphérie du substrat afin de ne pas être en contact, ni l'une, ni l'autre, avec la structure de cadre de vitrage 3.

Cette caractéristique se voit plus particulièrement en figure 2 où il est illustré que le feuilletage réalisé par la feuille de verre principale 15 qui est collée à la surface intermédiaire 12 par la matière plastique principale 16 s'arrête en haut à une distance s du bord inférieur du trou 14 et s'arrête aussi à une distance, qui est de préférence la même, du chant périphérique 13 ; cette distance s est d'au moins 5 mm, et de préférence d'au moins 7 mm ; elle peut être par exemple de 6 mm, ou de 8 mm.

Cette caractéristique est importante pour conférer au vitrage sa qualité de vitrage de sécurité tout en permettant de préserver la structure de la fenêtre ouvrable ; si la feuille de matière plastique et la feuille de verre qui sont ajoutées sur la face intermédiaire du substrat allaient jusqu'au chant périphérique 13 du substrat et jusqu'au bord inférieur du trou 14 ou sur les côtés de la fenêtre ouvrable, alors ces feuilles seraient en contact avec la structure de cadre de vitrage 3 et l'effort requis pour casser le vitrage sous la fenêtre en cas d'urgence risquerait d'endommager la structure de cadre de fenêtre.

Or, si cette structure est endommagée, elle risque de gêner l'évacuation ; c'est un but principal de l'invention d'éviter cela.

Dans l'exemple de réalisation détaillé ici, c'est la face intermédiaire 12 du substrat extérieur 10 qui comporte dans une partie du vitrage qui est située sous ladite fenêtre la feuille de matière plastique principale 16, puis sur cette feuille de matière plastique principale la feuille verre principale 15, mais ce pourrait être la face intermédiaire 22 du substrat intérieur 20 qui comporte dans une partie du vitrage qui est située sous ladite fenêtre la feuille de matière plastique principale, puis sur cette feuille de matière plastique principale la feuille verre principale.

Un feuilletage principal est ainsi réalisé, qui comprend ladite feuille de matière plastique principale 16 et ladite feuille verre principale 15.

Dans l'absolu, il est possible que la face intermédiaire 12, 22 de chacun des deux substrats 10, 20 qui fait face à la cavité de vitrage 4 comporte, chacune, dans une partie du vitrage qui est située sous ladite fenêtre :
- d'une part une feuille de verre principale
- et d'autre part une feuille de matière plastique principale,
- avec cette feuille de matière plastique principale qui est située entre la face intermédiaire et la feuille de verre,
- cette feuille de matière plastique principale qui est en contact à la fois avec la face intermédiaire et avec la feuille de verre,
- sans que les feuilles de verre et les feuilles de matière plastique soient au contact de ladite structure de cadre de vitrage.

Comme visible plus particulièrement sur la figure 4, la structure de cadre de vitrage 3 comporte deux entretoises :
- une entretoise périphérique 30 (ou « espaceur ») qui est située tout autour de la périphérie des deux substrats 10, 20, c'est-à-dire qu'elle suit le chant périphérique 13, 23 de ces deux substrats et
- une entretoise interne 31 (ou « espaceur ») qui est située tout autour de la périphérie des deux trous 14, 24.

Chacune de ces deux entretoises est de préférence d'un seul tenant. Elles ne sont pas en contact l'une avec l'autre.

Chacune de ces deux entretoises est ici positionnée contre les faces intermédiaires 12, 22 des substrats, sans être en contact avec les chants périphériques 13, 23 des substrats.

Les entretoises peuvent être par exemple en matière plastique et/ou en métal et/ou en alliage métallique ; elles permettent de maintenir les deux substrats 10, 20 à une distance constante l'un de l'autre et de créer la cavité de vitrage 4.

Au regard de la hauteur des entretoises (lorsqu'observées verticalement), la distance s évoquée ci-dessus se traduit par le fait que la feuille de verre principale 15 et la feuille de matière plastique principale 16 sont disposés en retrait t d'au moins 2 mm, et de préférence d'au moins 5 mm, par rapport à ladite structure de cadre de vitrage 3, c'est-à-dire par rapport à l'entretoise interne 31 en haut de ce feuilletage et par rapport à l'entretoise périphérique 30 sur les côtés latéraux et en bas de ce feuilletage.

La structure de cadre de vitrage 3 comporte par ailleurs des montants horizontaux haut 32 et bas 32', ainsi que des montants latéraux gauche 33 et droit 33' (vu de l'intérieur, comme en figure 1). Ces montants sont de préférence en métal ou en alliage métallique.

Cette figure 1 montre par ailleurs une couche de masquage 9, située sur la face intérieure 21 du substrat intérieur (et non illustrée en figure 4). Cette couche de masquage cache la périphérie de cette face intérieure 21, ainsi que la périphérie de la fenêtre 2 ouvrable ; Cette couche de masquage cache aussi tout ce qui est, en direction de l'extérieur, derrière la périphérie de la face intérieure 21 et la périphérie de la fenêtre 2 ouvrable.

La structure de cadre de vitrage 3 comporte en outre un cordon de colle périphérique 34 qui permet de coller les chants périphériques 13, 23 des substrats et l'entretoise périphérique 30 avec les montants 32, 32', 33, 33'. Ce cordon de colle peut être par exemple à base de polyuréthane ou silicone ou MS polymère ou polysulfide.

Les montants 32 ; 32', 33 et 33' sont facultatifs car il est possible que le vitrage soit collé dans la baie sans utiliser de montants ou en utilisant seulement des montants latéraux ou des montants horizontaux.

Comme visible en figures 2 et 4, la face intermédiaire 12 du substrat extérieur comporte dans une partie du vitrage située au-dessus de ladite fenêtre 2 (et plus précisément sur cette figure au-dessus du trou 14 qui accueille la fenêtre 2), d'une part une feuille de verre secondaire 17 et d'autre part une feuille de matière plastique secondaire 18 qui est interposée, en contact, entre la face intermédiaire 12 et la feuille de verre secondaire 17.

La feuille de matière plastique secondaire 18 et la feuille de verre secondaire 17 sont aussi situées de chaque côté latéral de ladite fenêtre (et plus précisément sur cette figure de chaque côté latéral du trou 14 qui accueille la fenêtre 2).

Ainsi, le feuilletage secondaire par la feuille de matière plastique secondaire 18 et la feuille de verre secondaire 17 encadre le trou 14 au-dessus et sur ses côtés gauche et droit, en ayant une forme de U inversé ; ce feuilletage ne s'étend pas en dessous du trou 14 car c'est un autre feuilletage qui est présent en dessous de ce trou : le feuilletage principal avec la feuille de matière plastique principale 16 et la feuille verre principale 15.

Pour une bonne tenue mécanique du feuilletage secondaire au-dessus de la fenêtre et sur ses côtés, la feuille de verre secondaire 17 et la feuille de matière plastique secondaire 18 sont, de préférence, au contact de ladite structure de cadre de vitrage 3 et plus particulièrement ici, à proximité du chant périphérique 13 au contact de l'entretoise périphérique 30 et à proximité du trou 14 au contact de l'entretoise interne 31. Cela renforce la conservation de l'intégrité du vitrage lors de la rupture du vitrage sous la fenêtre ouvrable (mise en œuvre de l'issue de secours).

La feuille de verre secondaire 17 présente de préférence la même épaisseur que la feuille verre principale 15 et la feuille de matière plastique secondaire 18 présente de préférence la même épaisseur que la feuille de matière plastique principale 16 ; toutefois, ces feuilles de verre et ses feuilles de matière plastique ne se chevauchent pas ; le feuilletage secondaire est séparé du feuilletage principal par la distance s, qui réalise une bande de séparation présentant une hauteur d'ua moins 2 mm et de préférence comprise entre 5 et 10 mm.

En référence à la figure 2, chacun peut constater que l'enseignement direct de la demande de brevet européen N° EP 2 363 284 citée plus haut conduirait à réaliser un feuilletage unique sur le substrat porteur, qui intégrerait dans un seul et unique feuilletage, à la fois la feuille de matière plastique principale et la feuille de matière plastique secondaire en une seule feuille de matière plastique et à la fois la feuille de verre principale et la feuille de verre secondaire en une seule feuille de verre. Il n'y aurait donc pas la distance s visible en figure 2.

Comme visible en figures 3 et 4, la face intermédiaire 22 du substrat intérieur comporte dans une partie du vitrage située au-dessus de ladite fenêtre 2 (et plus précisément sur cette figure au-dessus du trou 24 qui accueille la fenêtre 2), d'une part une feuille de verre secondaire 17' et d'autre part une feuille de matière plastique secondaire 18' qui est interposée, en contact, entre la face intermédiaire 22 et la feuille de verre secondaire 17'.

La feuille de matière plastique secondaire 18' et la feuille de verre secondaire 17' sont aussi situées de chaque côté latéral de ladite fenêtre (et plus précisément sur cette figure de chaque côté latéral du trou 24 qui accueille la fenêtre 2).

Pour une bonne tenue mécanique de ce feuilletage, la feuille de verre secondaire 17' et la feuille de matière plastique secondaire 18' sont, de préférence, au contact de ladite structure de cadre de vitrage 3 et plus particulièrement ici, à proximité du chant périphérique 23 au contact de l'entretoise périphérique 30 et à proximité du trou 24 au contact de l'entretoise interne 31. Cela renforce la conservation de l'intégrité du vitrage lors de la rupture du vitrage sous la fenêtre ouvrable (mise en œuvre de l'issue de secours).

Il a été vérifié qu'une tenue mécanique adéquate est obtenue sur la base de l'exemple des figures 1 à 4, lorsque :
- les deux substrats 10, 20 sont chacun en verre qui a subi un traitement destiné à le renforcer, tel qu'un traitement thermique et en particulier un traitement thermique de trempe et sont chacune d'une épaisseur de 3 à 6 mm, par exemple 4 mm
- la feuille verre principale 15 et les deux feuilles de verre secondaires 17, 17' sont toutes les trois en verre qui n'a subi aucun traitement destiné à le renforcer et sont chacune d'une épaisseur de 2 mm
- la feuille de matière plastique principale 16 et les deux feuilles de matière plastique secondaires 18, 18' sont toutes les trois en PVB et sont chacune d'une épaisseur de 0,76 mm.

Eventuellement, la feuille verre principale 15 et les deux feuilles de verre secondaires 17, 17' peuvent être en verre qui a subi un traitement destiné à les renforcer, tel qu'un traitement thermique et en particulier un traitement thermique de trempe.

Il a été vérifié qu'une isolation thermique adéquate est obtenue sur la base de l'exemple des figures 1 à 4, lorsque ladite cavité de vitrage 4 est située tout autour de ladite fenêtre 2, d'un seul tenant, qu'elle est remplie d'argon et présente d'une part une épaisseur uniforme et identique à la précédente dans sa partie sous la fenêtre 2 et d'autre part une épaisseur uniforme dans sa partie de chaque côté et au-dessus de la fenêtre 2.

La distance entre la face extérieure 11 et la face intérieure 21 est ainsi constante et est ici de 25,76 mm.

Comme visible en figure 4, la fenêtre 2 comporte un élément verrier extérieur 40, un élément verrier intérieur 50 et une structure de cadre de fenêtre 35 qui maintient l'élément verrier extérieur 40 avec l'élément verrier intérieur 50 en réalisant une cavité de fenêtre 6 qui est ainsi située entre l'élément verrier extérieur 40 et l'élément verrier intérieur 50 :
- l'élément verrier extérieur 40 comporte deux faces principales : une face extérieure 41 qui fait face à l'espace extérieur E et une face intermédiaire 42 qui est à l'opposé de la face extérieure ; l'élément verrier extérieur 40 comporte par ailleurs un chant périphérique 43,
- l'élément verrier intérieur 50 comporte deux faces principales : une face intérieure 51 qui fait face à l'espace intérieur I et une face intermédiaire 52 qui est à l'opposé de la face intérieure ; l'élément verrier intérieur 50 comporte par ailleurs un chant périphérique 53.

Comme visible plus particulièrement sur la figure 4, la structure de cadre de fenêtre 35 comporte une entretoise de fenêtre périphérique 36 (ou « espaceur ») qui est située tout autour de la périphérie des deux éléments verriers 40, 50.

Cette entretoise de fenêtre périphérique 36 est de préférence d'un seul tenant et est ici positionnée contre les faces intermédiaires 42, 52 des éléments verriers, sans être en contact avec les chants périphériques 43, 53 de ces éléments verriers.

Cette entretoises peut être par exemple en matière plastique et/ou en métal et/ou en alliage métallique et permet de maintenir les deux éléments verriers 40, 50 à une distance constante l'un de l'autre et de créer la cavité de fenêtre 6.

La structure de cadre de fenêtre 35 comporte par ailleurs des montants horizontaux haut et bas, ainsi que des montants latéraux gauche et droit. Ces montants sont de préférence en métal ou en alliage métallique.

La structure de cadre de fenêtre 35 comporte en outre un cordon de colle périphérique 34' qui permet de coller les chants périphériques 43, 53 des éléments verriers et l'entretoise de fenêtre périphérique 36 avec les montants. Ce cordon de colle 34' est de préférence dans la même matière que le cordon de colle périphérique 34.

La face 42 de l'élément verrier extérieur qui fait face à la cavité de fenêtre 6 comporte :
- d'une part une feuille de verre de fenêtre 45,
- et d'autre part une feuille de matière plastique de fenêtre 46,
- avec cette feuille de matière plastique de fenêtre 46 qui est située entre la face intermédiaire 42 et la feuille de verre de fenêtre 45,
- cette feuille de matière plastique de fenêtre 46 qui est en contact à la fois avec la face intermédiaire 42 et avec la feuille de verre de fenêtre 45,
- avec la feuille de verre de fenêtre 45 et la feuille de matière plastique de fenêtre 46 au contact de la structure de cadre de fenêtre 35 (et plus précisément ici le cordon de colle périphérique 34').

Les deux éléments verriers 40, 50 sont chacun en verre qui a subi un traitement destiné à le renforcer, tel qu'un traitement thermique et en particulier un traitement thermique de trempe et sont chacun d'une épaisseur identique respectivement aux substrats 10, 20.

La feuille de verre de fenêtre 45 présente la même épaisseur que la feuille de verre principale 15 et la feuille de matière plastique de fenêtre 46 présente la même épaisseur que la feuille de matière plastique principale 16.

La distance d entre la face extérieure 41 et la face intérieure 51 est ainsi constante et est ici de 25,76 mm ; elle est identique à la distance entre la face extérieure 11 et la face intérieure 21.

La fenêtre 2 est mobile par rapport à la structure de cadre de vitrage 3 selon un mouvement de rotation illustré par la double flèche R en figure 4, vers l'intérieur ; ce mouvement est limité à un angle d'ouverture de 45 ° environ.

Pour permettre cette ouverture, la structure de cadre de vitrage 3 comporte une traverse 38 horizontale située sous ladite fenêtre 2 qui permet au montant horizontal bas 37 de cadre de fenêtre de pivoter sur lui-même selon un axe horizontal et par rapport à la traverse 38 horizontale.

Deux poignées 29 sont prévues sur le montant supérieur de la structure de cadre de fenêtre 35 pour faciliter la préhension de la fenêtre 2 par les passagers qui souhaite l'ouvrir ou la fermer.

La traverse 38 est également de préférence en métal ou en alliage métallique et est collée à la face intérieure 21 du substrat intérieur 20 grâce au cordon de colle qui entoure les trous 14, 24.

Cette traverse 38 n'est pas en contact avec deux montants latéraux 33, 33' de la structure de cadre de vitrage 3.

Toutefois, pour cacher l'absence de feuilletage à gauche et à droite de la traverse 38 sur quelques millimètres, des caches latéraux 39, 39' sont collés sur la face intérieure 21, comme visible en figure 1. Un motif décoratif appliqué par exemple par sérigraphie sur les faces intermédiaires 12 et 22 peut aussi assurer cette fonction esthétique.

Comme visible en figure 4, le vitrage 1 selon l'invention ne comporte aucun élément saillant vers l'extérieur, au-delà de la face extérieure 11 du substrat extérieur 10.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Vitrage (1) latéral d'un moyen de transport, en particulier vitrage de train, ledit vitrage étant un vitrage multiple, fixe, à fenêtre (2) ouvrable, ledit vitrage comprenant :
- un substrat extérieur (10) ayant une face extérieure (11) qui fait face à un espace extérieur (E), une face intermédiaire (12) à l'opposé de la face extérieure, ainsi qu'un chant périphérique (13),
- un substrat intérieur (20) ayant une face intérieure (21) qui fait face à un espace intérieur (I), une face intermédiaire (22) à l'opposé de la face intérieure, ainsi qu'un chant périphérique (23),
- et une structure de cadre de vitrage (3) qui tient le substrat extérieur et le substrat intérieur ensemble de telle sorte que le vitrage sépare ledit espace extérieur dudit espace intérieur avec une cavité de vitrage (4) située entre le substrat extérieur et le substrat intérieur,
- ledit substrat extérieur et ledit substrat intérieur comportant chacun, dans une partie supérieure, un trou (14, 24) débouchant sur chaque face du substrat et séparé du chant périphérique du substrat, les trous des substrats étant en vis-à-vis l'un de l'autre, afin de permettre de réaliser la fenêtre (2) ouvrable,
- la structure de cadre de vitrage (3) maintenant en outre les deux substrats autour des trous (14, 24),
***caractérisé en ce que*** au moins une face intermédiaire (12, 22) de substrat qui fait face à la cavité de vitrage (4) comporte dans une partie du vitrage située sous ladite fenêtre un feuilletage principal comportant d'une part une feuille de verre principale (15) et d'autre part une feuille de matière plastique principale (16) qui est située en contact entre la face intermédiaire (12, 22) et la feuille de verre principale (15), sans que la feuille de verre principale et la feuille de matière plastique principale soient au contact de ladite structure de cadre de vitrage (3), ledit feuilletage principal étant situé sous ladite fenêtre (2), sans s'étendre sur les côtés gauche et droit de ladite fenêtre (2), ni au-dessus de ladite fenêtre (2).

2. Vitrage (1) selon la revendication 1, ***caractérisé en ce que*** ladite feuille de verre principale (15) et ladite feuille de matière plastique principale (16) sont disposées en retrait (t) d'au moins 2 mm, et de préférence entre 2 et 5 mm, par rapport à ladite structure de cadre de vitrage (3).

3. Vitrage (1) selon la revendication 1 ou 2, ***caractérisé en ce que*** au moins une face intermédiaire (12, 22) de substrat qui fait face à la cavité de vitrage (4), et de préférence les deux faces intermédiaires (12, 22) de substrat qui font face à la cavité de vitrage (4), comporte(nt) dans une partie du vitrage située au-dessus de ladite fenêtre (2) un feuilletage secondaire comportant d'une part une feuille de verre secondaire (17, 17') et d'autre part une feuille de matière plastique secondaire (18, 18') qui est située en contact entre la face intermédiaire (12, 22) et la feuille de verre secondaire (17), avec la feuille de verre secondaire (17, 17') et la feuille de matière plastique secondaire (18, 18') au contact de ladite structure de cadre de vitrage (3).

4. Vitrage (1) selon la revendication 3, ***caractérisé en ce que*** ladite feuille de matière plastique secondaire (18, 18') et ladite feuille de verre secondaire (17, 17') sont aussi situées de chaque côté latéral de ladite fenêtre.

5. Vitrage (1) selon la revendication 3 ou 4, ***caractérisé en ce que*** ladite feuille de matière plastique principale (16) et ladite feuille de matière plastique secondaire (18) sont toutes les deux situées contre la face intermédiaire (12) du substrat extérieur (10).

6. Vitrage (1) selon l'une quelconque des revendications 1 à 5, ***caractérisé en ce que*** chaque substrat (10, 20) est en verre qui a subi un traitement chimique ou thermique destiné à le renforcer.

7. Vitrage (1) selon l'une quelconque des revendications 1 à 6, ***caractérisé en ce que*** ladite fenêtre (2) comporte un élément verrier extérieur (40), un élément verrier intérieur (50) et une structure de cadre de fenêtre (35) maintenant ledit élément verrier extérieur (40) avec ledit élément verrier intérieur (50) en réalisant une cavité de fenêtre (6) située entre l'élément verrier extérieur (40) et l'élément verrier intérieur (50), une face (42) de l'élément verrier extérieur qui fait face à la cavité de fenêtre (6) comportant d'une part une feuille de verre de fenêtre (45) et d'autre part une feuille de matière plastique de fenêtre (46) qui est située en contact entre l'élément verrier extérieur (40) et la feuille de verre de fenêtre (45), avec la feuille de verre de fenêtre et la feuille de matière plastique de fenêtre au contact de ladite structure de cadre de fenêtre (35).

8. Vitrage (1) selon l'une quelconque des revendications 1 à 7, ***caractérisé en ce que*** ladite structure de cadre de vitrage (3) comporte une traverse (38) horizontale située sous ladite fenêtre (2), ladite traverse n'étant pas en contact avec deux montants latéraux (33, 33') de la structure de cadre de vitrage (3).

9. Vitrage (1) selon l'une quelconque des revendications 1 à 8, ***caractérisé en ce que*** ladite cavité de vitrage (4) est située tout autour de ladite fenêtre (2).

10. Vitrage (1) selon l'une quelconque des revendications 1 à 9, ***caractérisé en ce qu'***il ne comporte aucun élément saillant vers l'extérieur, au-delà de la face extérieure (11) du substrat extérieur (10).

## Patentansprüche

1. Seitenverglasung (1) eines Transportmittels, insbesondere Zugverglasung, wobei die Verglasung eine feststehende Mehrfachverglasung mit einem zu öffnenden Fenster (2) ist, wobei die Verglasung umfasst:
- ein äußeres Substrat (10), das eine einem Außenraum (E) zugewandte Außenfläche (11), eine der Außenfläche gegenüberliegende Zwischenfläche (12) sowie einen Umfangsrand (13) aufweist,
- ein inneres Substrat (20), das eine einem Innenraum (I) zugewandte Innenfläche (21), eine der Innenfläche gegenüberliegende Zwischenfläche (22) sowie einen Umfangsrand (23) aufweist,
- und eine Verglasungsrahmenstruktur (3), die das äußere Substrat und das innere Substrat derart zusammenhält, dass die Verglasung den Außenraum von dem Innenraum mit einem Verglasungshohlraum (4) trennt, der zwischen dem äußeren Substrat und dem inneren Substrat angeordnet ist,
- wobei das äußere Substrat und das innere Substrat jeweils in einem oberen Teil ein Loch (14, 24) aufweisen, das sich auf jeder Seite des Substrats öffnet und von dem Umfangsrand des Substrats getrennt ist, wobei die Löcher der Substrate einander gegenüberliegen, um zu ermöglichen, dass das zu öffnende Fenster (2) realisiert werden kann,
- wobei die Verglasungsrahmenstruktur (3) ferner die zwei Substrate um die Löcher (14, 24) hält,
***dadurch gekennzeichnet, dass*** mindestens eine Zwischenfläche (12, 22) des Substrats, die dem Verglasungshohlraum (4) zugewandt ist, in einem Teil der Verglasung, der unter dem Fenster angeordnet ist, eine Hauptlaminierung umfasst, die einerseits eine Hauptglasscheibe (15) und andererseits eine Hauptkunststoffscheibe (16) umfasst, die in Kontakt zwischen der Zwischenfläche (12, 22) und der Hauptglasscheibe (15) angeordnet ist, ohne dass die Hauptglasscheibe und die Hauptkunststoffscheibe in Kontakt mit der Verglasungsrahmenstruktur (3) stehen, wobei die Hauptlaminierung unter dem Fenster (2) angeordnet ist, ohne sich auf der linken und rechten Seite des Fensters (2) oder über dem Fenster (2) zu erstrecken.

2. Verglasung (1) nach Anspruch 1, ***dadurch gekennzeichnet, dass*** die Hauptglasscheibe (15) und die Hauptkunststoffscheibe (16) um mindestens 2 mm und vorzugsweise zwischen 2 und 5 mm in Bezug auf die Verglasungsrahmenstruktur (3) zurückgesetzt (t) angeordnet sind.

3. Verglasung (1) nach Anspruch 1 oder 2, ***dadurch gekennzeichnet, dass*** mindestens eine dem Verglasungshohlraum (4) zugewandte Zwischenfläche (12, 22) des Substrats, und vorzugsweise die dem Verglasungshohlraum (4) zugewandten zwei Zwischenflächen (12, 22) des Substrats in einem Teil der Verglasung oberhalb des Fensters (2) eine sekundäre Laminierung umfasst/umfassen, die einerseits eine sekundäre Glasscheibe (17, 17') und andererseits eine sekundäre Kunststoffscheibe (18, 18') umfassen, die in Kontakt zwischen der Zwischenfläche (12, 22) und der sekundären Glasscheibe (17) angeordnet ist, wobei die sekundäre Glasscheibe (17, 17') und die sekundäre Kunststoffscheibe (18, 18') in Kontakt mit der Verglasungsrahmenstruktur (3) stehen.

4. Verglasung (1) nach Anspruch 3, *dadurchgekennzeichnet, dass* die sekundäre Kunststoffscheibe (18, 18') und die sekundäre Glasscheibe (17, 17') auch an jeder seitlichen Seite des Fensters angeordnet sind.

5. Verglasung (1) nach Anspruch 3 oder 4, ***dadurch gekennzeichnet, dass*** die Hauptkunststoffscheibe (16) und die sekundäre Kunststoffscheibe (18) beide gegen die Zwischenfläche (12) des äußeren Substrats (10) angeordnet sind.

6. Verglasung (1) nach einem der Ansprüche 1 bis 5, ***dadurch gekennzeichnet, dass*** jedes Substrat (10, 20) aus einem Glas besteht, das zur Verstärkung einer chemischen oder thermischen Behandlung unterzogen wurde.

7. Verglasung (1) nach einem der Ansprüche 1 bis 6, ***dadurch gekennzeichnet, dass*** das Fenster (2) ein äußeres Glaselement (40), ein inneres Glaselement (50) und eine Fensterrahmenstruktur (35) umfasst, die das äußere Glaselement (40) mit dem inneren Glaselement (50) durch Realisieren eines Fensterhohlraums (6), der zwischen dem äußeren Glaselement (40) und dem inneren Glaselement (50) angeordnet ist, hält, wobei eine Fläche (42) des äußeren Glaselements, die dem Fensterhohlraum (6) zugewandt ist, einerseits eine Fensterglasscheibe (45) und andererseits eine Fensterkunststoffscheibe (46) umfasst, die in Kontakt zwischen dem äußeren Glaselement (40) und der Fensterglasscheibe (45) angeordnet ist, wobei die Fensterglasscheibe und die Fensterkunststoffscheibe in Kontakt mit der Fensterrahmenstruktur (35) stehen.

8. Verglasung (1) nach einem der Ansprüche 1 bis 7, ***dadurch gekennzeichnet, dass*** die Verglasungsrahmenstruktur (3) eine horizontale Querstange (38) umfasst, die unter dem Fenster (2) angeordnet ist, wobei die Querstange nicht in Kontakt mit zwei seitlichen Stützen (33, 33') der Verglasungsrahmenstruktur (3) steht.

9. Verglasung (1) nach einem der Ansprüche 1 bis 8, ***dadurch gekennzeichnet, dass*** der Verglasungshohlraum (4) rund um das Fenster (2) angeordnet ist.

10. Verglasung (1) nach einem der Ansprüche 1 bis 9, ***dadurch gekennzeichnet, dass*** sie über die Außenfläche (11) des äußeren Substrats (10) hinaus kein nach außen vorstehendes Element aufweist.

## Claims

1. Lateral glazing (1) for a means of transport, particularly train glazing, said glazing being fixed multiple glazing, with an openable window (2), said glazing comprising:
- an exterior substrate (10) having an exterior face (11) which faces an exterior space (E), an intermediate face (12) on the opposite side from the exterior face, and a peripheral edge face (13),
- an interior substrate (20) having an interior face (21) which faces an interior space (I), an intermediate face (22) on the opposite side from the interior face, and a peripheral edge face (23),
- and a glazing frame structure (3) which holds the exterior substrate and the interior substrate together in such a way that the glazing separates said exterior space from said interior space with a glazing cavity (4) situated between the exterior substrate and the interior substrate,
- said exterior substrate and said interior substrate each comprising, in an upper part, a hole (14, 24) opening onto each face of the substrate and separated from the peripheral edge face of the substrate, the holes in the substrates facing one another so as to allow the openable window (2) to be created,
- the glazing frame structure (3) further holding the two substrates around the holes (14, 24),
***characterized in that*** at least one substrate intermediate face (12, 22) which faces the glazing cavity (4) comprises, in a part of the glazing that is situated under said window, a main lamination comprising on the one hand, a main sheet of glass (15) and, on the other hand, a main sheet of plastic (16) which is situated in contact between the intermediate face (12, 22) and the main sheet of glass (15) without the main sheet of glass and the main sheet of plastic being in contact with said glazing frame structure (3), said main lamination being situated beneath the openable window and it does not extend on the left and right sides of the openable window, neither does it extend above the openable window.

2. The glazing (1) as claimed in claim 1, ***characterized in that*** said main sheet of glass (15) and said main sheet of plastic (16) are set back (t) by at least 2mm and preferably by between 2 and 5mm, from said glazing frame structure (3).

3. The glazing (1) as claimed in claim 1 or 2, ***characterized in that*** at least one substrate intermediate face (12, 22) which faces the glazing cavity (4), and preferably both substrate intermediate faces (12, 22) that face the glazing cavity (4) comprises (comprise), in a part of the glazing that is situated above said window (2), secondary lamination comprising on the one hand, a secondary sheet of glass (17, 17') and, on the other hand, a secondary sheet of plastic (18, 18') which is situated in contact between the intermediate face (12, 22) and the secondary sheet of glass (17), with the secondary sheet of glass (17, 17') and the secondary sheet of plastic (18, 18') in contact with said glazing frame structure (3).

4. The glazing (1) as claimed in claim 3, ***characterized in that*** said secondary sheet of plastic (18, 18') and said secondary sheet of glass (17, 17') are also situated on each lateral side of said window.

5. The glazing (1) as claimed in claim 3 or 4, ***characterized in that*** said main sheet of plastic (16) and said secondary sheet of plastic (18) are both situated against the intermediate face (12) of the exterior substrate (10).

6. The glazing (1) as claimed in any one of claims 1 to 5, ***characterized in that*** each substrate (10, 20) is made of glass that has undergone a chemical or heat treatment intended to strengthen it.

7. The glazing (1) as claimed in any one of claims 1 to 6, ***characterized in that*** said window (2) comprises an exterior glassworks element (40), an interior glassworks element (50) and a window frame structure (35) holding said exterior glassworks element (40) with said interior glassworks element (50) while creating a window cavity (6) situated between the exterior glassworks element (40) and the interior glassworks element (50), a face (42) of the exterior glassworks element that faces the window cavity (6) comprising, on the one hand, a sheet of window glass (45) and, on the other hand, a sheet of window plastic (46) which is situated in contact between the exterior glassworks element (40) and the sheet of window glass (45), with the sheet of window glass and the sheet of window plastic in contact with said window frame structure (35).

8. The glazing (1) as claimed in any one of claims 1 to 7, ***characterized in that*** said glazing frame structure (3) comprises a horizontal crossmember (38) situated beneath said window (2), said crossmember not being in contact with two lateral frame members (33, 33') of the glazing frame structure (3).

9. The glazing (1) as claimed in any one of claims 1 to 8, ***characterized in that*** said glazing cavity (4) is situated all around said window (2).

10. The glazing (1) as claimed in any one of claims 1 to 9, ***characterized in that*** it has no element protruding outward beyond the exterior face (11) of the exterior substrate (10).
